# EUROPÄISCHE PATENTSCHRIFT

(11) **EP 3 372 084 B1**
(45) Veröffentlichungstag und Bekanntmachung des Hinweises auf die Patenterteilung: **26.08.2020**
(21) Anmeldenummer: 18160702.9
(22) Anmeldetag: 08.03.2018
(51) Int. Cl.: A01N 59/00, B01D 47/02, B01D 53/38

(54) **OXIDATIVES VERFAHREN ZUR VERMINDERUNG ODER BESEITIGUNG VON ORGANISCHEN STOFFEN UND/ODER ANORGANISCHEN STOFFEN UND/ODER VON MIKROORGANISMEN IN EINEM LUFTSTROM**
OXIDATIVE METHOD FOR THE REDUCTION OR REMOVAL OF ORGANIC MATERIALS AND/ OR INORGANIC SUBSTANCES AND/OR MICRO-ORGANISMS IN AN AIRFLOW
PROCÉDÉ OXYDANT POUR LA RÉDUCTION OU L'ÉLIMINATION DE MATIÈRES ORGANIQUES ET/OU DE SUBSTANCES INORGANIQUES ET/OU DE MICRO-ORGANISMES DANS UN FLUX D'AIR

(30) Priorität: 08.03.2017 DE 102017104816
(43) Veröffentlichungstag der Anmeldung: 12.09.2018
(73) Patentinhaber: Küke, Fritz, 30916 Isernhagen (DE)
(72) Erfinder: Küke, Fritz, 30916 Isernhagen (DE); Holz, Stephanie, 31832 Springe (DE)
(74) Vertreter: Eisenführ Speiser

(56) Entgegenhaltungen:
- US-A1- 2007 259 416

## Beschreibung

Die Erfindung betrifft ein oxidatives Verfahren zur Verminderung oder Beseitigung von organischen Stoffen und/oder anorganischen Stoffen und/oder von Mikroorganismen in einem Luftstrom, eine Verwendung einer wässrigen Chloritlösung zur Herstellung einer Chlordioxid enthaltenden wässrigen Lösung in einem kontinuierlichen Verfahren und eine Vorrichtung zur Durchführung eines entsprechenden oxidativen Verfahrens.

Während der Haltung von Nutztieren in Stallgebäuden reichert sich die Stallluft mit organischen und anorganischen Stoffen sowie Mikroorganismen an. Hierbei handelt es sich beispielsweise um übel riechende Geruchsstoffe, Ammoniak, Staub, Sporen und andere Gase oder Partikel. Damit die Nutztiere im Stallgebäude fortlaufend mit frischer Luft versorgt werden, ist es erforderlich, die kontaminierte Luft aus dem Stallgebäude abzuführen. Dazu wird die Abluft über eine Absaugeinrichtung aus dem Stallraum entfernt und entweder über einen Abluftkamin ohne weitere Behandlung in die Atmosphäre freigesetzt oder vor dem Freisetzen aufgearbeitet, wodurch einige Verunreinigungen aus der Abluft entfernt werden können. Die verpflichtende Einhaltung von Grenzwerten wird u. a. in der Verordnung über genehmigungsbedürftige Anlagen vom 2. Mai 2013 (BGBI. I S. 973, 3756), die durch Artikel 3 der Verordnung vom 28. April 2015 (BGBI. I S. 670) geändert worden ist, beschrieben. In der DE 199 58483 A1 wird eine Vorrichtung zur Filterung eines Gases bzw. zur Filterung der Abluft aus einem Gebäude beschrieben, wobei das Gas über eine Absaugeinrichtung aus dem Gebäude entfernt wird und anschließend durch ein aus wenigstens zwei Kammern gebildetes Kammersystem geleitet wird. Diese Kammern sind durch eine zumindest abschnittsweise gasdurchlässige Wand aus einem porösen Material getrennt, die einer kontinuierlichen Befeuchtung ausgesetzt ist. Die beschriebene Vorrichtung gewährleistet eine weitgehende Reinigung des Gases, insbesondere der Abluft eines Stallgebäudes.

In der deutschen Patentanmeldung mit dem Aktenzeichen P 22 23 790.7-41 wird ein Verfahren zum Reinigen von Abwässern und Abluft beschrieben, welche Kohlenwasserstoffe, Alkohole, Aldehyde, Fettsäuren sowie schwefel- und stickstoffhaltige Verbindungen enthalten, bei dem die Abwässer bzw. die Abluft mit Alkali- oder Erdalkalichlorit im sauren Medium bis pH 6 behandelt wird.

In der DE 699 35 466 T2 wird ein Verfahren unter Verwendung von Peressigsäurezusammensetzungen zur Entfernung von Geruchsverbindungen aus der Atmosphäre oder aus einer Menge von Gas beschrieben, wobei die Geruchsverbindungen aus der Bearbeitung organischer Materialien in Arztpraxen oder Küchen hervorgehen. Insbesondere wird ein Geruchsverminderungsverfahren unter Verwendung von Flüssig-/Umgebungsluft- oder Flüssig-/Flüssigverarbeitung beschrieben, um gasförmige oder andere Abströme, welche Geruchsverbindungen enthalten, zu behandeln. Bei den Geruchsverbindungen kann es sich um organische Verbindungen und/oder anorganische Verbindungen handeln, insbesondere um organische Schwefelverbindungen, organische Stickstoffverbindungen, organische Sauerstoffverbindungen, Ammoniak, Wasserstoffsulfid etc. und Mischungen daraus.

In der US 2007/0259416 A1 wird ein Verfahren und eine Vorrichtung zur Entfernung von Geruchsstoffen und anderen unerwünschten Verbindungen aus Abluftströmen beschrieben. In dem beschriebenen Verfahren bzw. der beschriebenen Vorrichtung wird die Abluft in einem ersten Schritt einer biologischen Behandlung unterzogen. Dabei wird der zu reinigende Abluftstrom durch eine biologische Behandlungszone (Biowäscher) geleitet, in der Mikroorganismen auf einem Träger mit großer Oberfläche wachsen. Die Mikroorganismen sind dabei so gewählt, dass sie die im zu reinigenden Abluftstrom enthaltenden unerwünschten Verbindungen möglichst vollständig aufnehmen und verstoffwechseln können. Um die Mikroorganismen feucht zu halten und um - insbesondere saure - Stoffwechselprodukte der Mikroorganismen abzuführen, werden die Mikroorganismen im Gegenstrom zum Luftstrom mit einer wässrigen Spülflüssigkeit gespült, der beispielsweise auch zum Wachstum der Mikroorganismen benötigte Nährstoffe zugegeben werden können. Diese Spülflüssigkeit kann dabei in einem Sumpf gesammelt und anschließend zumindest teilweise zum Spülen der Mikroorganismen wiederverwendet werden. Nach der biologischen Behandlungszone wird die Abluft in eine chemische Behandlungszone geleitet. Ein Teil der Spülflüssigkeit kann dem Sumpf und dem Spülflüssigkeitskreislauf entnommen werden, um als Reaktant bei der Erzeugung von Chlordioxid aus der "Säure-Chlorit" Reaktion zu dienen. Durch den niedrigen pH-Wert der Spülflüssigkeit ist die Erzeugung von Chlordioxid aus Chlorit ohne eine weitere Einstellung des pH-Wertes möglich und unter Verzicht auf Precursor wie Chlor, Natriumhypochlorit oder weiterer Säuren (s. Absatz [0042] letzter Satz). Das erzeugte Chlordioxid wird - beispielsweise durch Einleiten eines Gases - aus der Reaktionslösung getrieben und anschließend im gasförmigen Zustand in die chemische Behandlungszone geleitet, wo es mit der Abluft vermischt wird. Das Chlordioxid kann verbliebene unerwünschte Verbindungen oxidieren und wird anschließend gemeinsam mit der Abluft über einen Auslass aus der Anlage entfernt. Ein Rezyklieren der chlordioxidhaltigen Reaktionslösung oder des chlordioxidhaltigen Luftstromes erfolgt nicht. Die zur Herstellung des Chlordioxidgases verwendete Reaktionslösung wird nach und nach aus dem System geleitet und durch neue Spülflüssigkeit aus dem Sumpf ersetzt. Ein Nachteil des beschriebenen Verfahrens bzw. der beschriebenen Vorrichtung ist, dass die Anlage nicht direkt in Betrieb genommen werden kann, sondern zunächst ein Wachstum der Mikroorganismen erfolgen muss, das bis zu einer Woche dauern kann. Zudem müssen die Mikroorganismen so gewählt werden, dass sie die unerwünschten Verbindungen bestmöglich entfernen können. Ein Wechsel oder ein Anpassen der Mikroorganismenkulturen, um auf geänderte Abluftbedingungen zu reagieren, ist nicht ohne weiteres möglich. Auch darf die zu reinigende Abluft keine für die Mikroorganismen schädlichen Stoffe - wie beispielsweise Chlordioxid - enthalten. Die Kontamination der biologischen Behandlungszone mit Chlordioxidgas aus der nachgelagerten chemischen Behandlungszone wird konstruktiv durch z.B. Grenzschichten verhindert.

Die bisher bekannten Verfahren haben den Nachteil, dass immer nur eine Verunreinigungsart (übel riechende Geruchsstoffe, Ammoniak, Staub, Sporen oder andere Gase oder Partikel) oder wenige Verunreinigungsarten gleichzeitig aus der Abluft selektiv entfernt werden. Chemo- bzw. Säure-Wäscher entfernen mehr als 90 % des Ammoniaks und mindestens 70 % des Staubes, allerdings keine weiteren Geruchsstoffe. Biofilter entfernen hingegen Geruchsstoffe, allerdings sind sie nicht geeignet, um Ammoniak zu entfernen. Entsprechend ist es bisher nötig, dass zur effektiven Reinigung der Abluft verschiedene Verfahren hintereinander durchgeführt werden. Beispielsweise erfolgt zunächst eine Filterung der Abluft, um die Abluft von großpartikulärem Staub und Feststoffen zu befreien. Anschließend erfolgt eine Abscheidung von Ammoniak durch Waschen mit Schwefelsäure. Im nächsten Schritt erfolgt die Reinigung durch einen Biowäscher (Rieselbettreaktor) und/oder Biofilter. Die Kombination von verschiedenen Verfahren ist wartungs- und kostenintensiv und die Anlagen benötigen viel Platz.

Aufgabe der vorliegenden Erfindung war es daher, ein Verfahren zu entwickeln, bei dem eine effektive Verminderung oder Beseitigung von organischen Stoffen und/oder anorganischen Stoffen und/oder von Mikroorganismen in einem Luftstrom erreicht werden kann und das Verfahren gleichzeitig kostengünstig und sicher durchgeführt werden kann.

Eine weitere Aufgabe der vorliegenden Erfindung ist es, das Verfahren so auszugestalten, dass bestehende Anlagen einfach umgerüstet werden können, um die Effektivität von bestehende Anlagen durch einen einfachen Umbau signifikant zu verbessern.

Diese Aufgabe wird vorliegend gelöst durch ein oxidatives Verfahren zur Verminderung oder Beseitigung von organischen Stoffen und/oder anorganischen Stoffen und/oder von Mikroorganismen in einem Luftstrom,
mit folgenden kontinuierlich durchgeführten Schritten:
- Erzeugen eines Luftstroms umfassend organische Stoffe und/oder anorganische Stoffe und/oder Mikroorganismen,
- Herstellen einer Chlordioxid enthaltenden wässrigen Lösung,
- Kontaktieren der Chlordioxid enthaltenden wässrigen Lösung mit dem Luftstrom, sodass das Chlordioxid im Luftstrom enthaltene organische Stoffe und/oder anorganische Stoffe und/oder Mikroorganismen oxidiert und eine an Chlordioxid abgereicherte wässrige Lösung gebildet wird,
   wobei das Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt,
   und
- zumindest teilweises Rezyklieren der an Chlordioxid abgereicherten wässrigen Lösung und Einsetzen der rezyklierten wässrigen Lösung als wässriges Medium beim Herstellen der Chlordioxid enthaltenden wässrigen Lösung.

In eigenen Untersuchungen hat es sich überraschenderweise gezeigt, dass durch ein erfindungsgemäßes Verfahren ein Luftstrom effektiv von organischen Stoffen und/oder anorganischen Stoffen und/oder von Mikroorganismen befreit werden kann, wobei organische Stoffe und/oder anorganische Stoffe durch das Chlordioxid oxidiert werden. Zudem werden durch das Verfahren Staub, Sporen und andere Partikel aus dem Luftstrom entfernt. Das Chlordioxid weist zudem eine desinfizierende Wirkung auf, sodass Mikroorganismen, wie Bakterien und/oder Pilze bzw. deren Sporen, abgetötet werden können.

Im Vergleich zu anderen Oxidationsmitteln, die zur Beseitigung von organischen Stoffen und/oder anorganischen Stoffen eingesetzt werden, hat Chlordioxid den Vorteil, dass es während des Kontaktierens der Chlordioxid enthaltenden wässrigen Lösung mit dem Luftstrom zumindest teilweise in die Gasphase übergeht und somit auch Stoffe oxidiert, die schlecht wasserlöslich sind und in der wässrigen Lösung nicht oder nur sehr schlecht oxidiert werden können. Aufgrund seiner geringen UV-Stabilität ist Chlordioxid zudem leicht abbaubar und gegebenenfalls freiwerdendes Chlordioxid wird sofort zersetzt.

Im Rahmen der vorliegenden Erfindung wird unter einem Luftstrom Luft unterschiedlicher Feuchtigkeit verstanden, die gemäß dem Mollier-h,x-Diagramm sowohl mit Wasser ungesättigte Luft, als auch oberhalb der Feuchtkugeltemperatur aerosolhaltige, mit Wasser gesättigte Luft, umfasst, die sich mit einem Volumenstrom |Q| >0 (m³/h) bewegt.

Erfindungsgemäß bevorzugt ist ein Verfahren, wobei der Luftstrom ein Luftstrom, vorzugsweise ein Abluftstrom, ist aus
- einer Stallanlage, bevorzugt einer Stallanlage für Hühner, Puten, Schweine oder Rinder,
- einer Gießereianlage,
- einer Tierkörperbeseitigungsanstalt,
- einer Fischmehlfabrik,
- einem Futtermittelbetrieb,
- einem lebensmittelverarbeitenden Betrieb,
- einer Abdeckerei,
- einer Mülldeponie,
- einer Kläranlage,
- einer Aminosäuregewinnungsanlage,
- einem Kühlturm oder Rückkühlwerk,
   oder
- einer Schlachtanlage für Nutztiere.

Eigene Untersuchungen haben gezeigt, dass das erfindungsgemäße Verfahren besonders gut geeignet ist zur Verminderung oder Beseitigung von organischen Stoffen und/oder anorganischen Stoffen und/oder von Mikroorganismen aus Abluftströmen und insbesondere aus Abluftströmen der oben näher spezifizierten Anlagen, Fabriken, Anstalten oder Betriebe. Abluftströme aus den oben näher spezifizierten Anlagen, Fabriken, Anstalten oder Betrieben zeichnen sich durch einen hohen Gehalt an übel riechenden Geruchsstoffen, Ammoniak, Staub, Mikroorganismen oder anderen Gasen oder Partikeln aus. Es hat sich überraschenderweise gezeigt, dass mit dem erfindungsgemäßen Verfahren eine Verminderung oder Beseitigung von organischen Stoffen und/oder anorganischen Stoffen und/oder von Mikroorganismen möglich ist, insbesondere aus Abluftströmen der oben näher spezifizierten Anlagen, Fabriken, Anstalten oder Betriebe.

Ein erfindungsgemäßes Verfahren ist bevorzugt, wobei die organischen Stoffe und/oder anorganischen Stoffe im erzeugten Luftstrom ausgewählt sind aus der Gruppe umfassend organische Schadstoffe und schwefelhaltige Schadstoffe. Das erfindungsgemäße Verfahren ist besonders gut geeignet, um organische Schadstoffe und/oder schwefelhaltige Schadstoffe aus einem Luftstrom zu entfernen. Dabei ist ein erfindungsgemäßes Verfahren besonders bevorzugt, wobei die organischen Stoffe und/oder anorganischen Stoffe im erzeugten Luftstrom ausgewählt sind aus der Gruppe 2-Methylpentan, 3-Methylpentan, n-Hexan, n-Heptan, 2-Methylheptan, 3-Methylheptan, 1-Octen, n-Octan, n-Nonan, 1-Decen, n-Decan, n-Undecan, n-Dodecan, n-Tridecan, n-Tetradecan, n-Pentadecan, n-Hexadecan, 2,2,4-Trimethylpentan, 2,2,4,6,6-Pentamethylheptan, Methylcyclopentan, Cyclohexan, Methylcyclohexan, trans-Decalin, trim. Isobuten (CAS: 77-56-947), 4-Vinylcyclohexen, Cyclohexen, Benzol, Toluol, Ethylbenzol, m/p-Xylol, o-Xylol, Styrol, 1,2-Diethylbenzol, n-Propylbenzol, Cumol (Iso-Propylbenzol), 1,2,3-Trimethylbenzol, 1,2,4-Trimethylbenzol (Pseudocumol), 1,3,5-Trimethylbenzol (Mesitylen), 1-Ethyl-2-methylbenzol, 3-Ethyltoluol (3-Ethylmethylbenzol), 4-Ethyltoluol (4-Ethylmethylbenzol), Naphthalin, 4-Phenylcyclohexen, Phenylacetylen (Ethinylbenzol), m-Methylstyrol, p-Methylstyrol, 2-Methylstyrol, m-Cymol, p-Cymol, o-Cymol, 1,3-Diethylbenzol, 1,4-Diethylbenzol, Butylbenzol, Hexylbenzol, Inden, 1,2,4,5-Tetramethylbenzol, 1,2,3,5-Tetramethylbenzol, 1,3-Diisopropylbenzol, 1,4-Diisopropylbenzol, 2-Methylnaphthalin, 1-Methylnaphthalin, 1-Phenyloctan, Acenaphthylen, Acenaphthen, Fluoren, 2,6-Dimethylnaphthalin, Indan, Propanal, Butanal, Pentanal, Furfural, Hexanal, Heptanal, Octanal, Nonanal, Decanal, Undecanal, Dodecanal, 2-Butenal, 2-Ethylhexanal, trans-2-Hexenal, Cuminaldehyd, Benzaldehyd, Aceton, 2-Hexanon, 3-Heptanon, 2-Heptanon, 3-Octanon, Methylethylketon, Methylisobutylketon (4-Methyl-2-pentanon), Cyclohexanon, Acetophenon, Methylacetat, Ethylacetat, Isopropylacetat, n-Butylacetat, iso-Butylacetat, Vinylacetat, n-Pentylacetat, n-Hexylacetat, Methoxypropylacetat (Dowanol), 2-Ethoxyethylacetat, 2-Butoxyethylacetat, Texanol, TXIB (Texanolisobutyrat), BDGA (CAS: 124-17-4), Acrylsäuremethylester, Acrylsäureethylester, Acrylsäurebutylester, Methacrylsäurebutylester, Methylmethacrylat, Methylbutyrat, Ethylmethacrylat, Butylformiat, Diethylenglykoldiacetat, Ethylenglykolmethyletheracetat, Benzoesäuremethylester, Dimethylsuccinat, Dimethylglutarat, Dimethyladipat, Dibutylmaleat, 1,6-Hexandiol-Diacrylat, Dimethylphtalat, Diethylphthalat, 2-Methoxyethanol (Ethylenglykolmonomethyl-ether), 1-Methoxy-2-propanol (Propylenglykol-monomethyl-ether), 2-Ethoxyethanol (Ethylenglykol-monoethyl-ether), 2-Butoxyethanol (Ethylenglykol-monobutyl-ether), 2-Butoxyethoxyethanol (Diethylenglycolmonobutylether), 2-Phenoxyethanol, 1-tert-butoxy-2-Propanol, 1,4-Dioxan, Di-n-butylether, Dioctylether, Ethylenglykolmonohexylether, Diethylenglykoldimethylether, Diethylenglykolmethylether, Diethylenglykolethylether, Diethylenglykolhexylether, Diethylenglykoldibutylether, Dipropylenglykolmethylether, DPGMBE (CAS: 29911-28-2), Triethylenglykolbutylether, Tripropylenglykolbutylether, 1,2-Propylenglykolpropylether, Tripropylenglykol, 1,2-Dichlorethan, 1,1,1-Trichlorethan, 1,1,2-Trichlorethan, Trichlorethen, Tetrachlorethen, 1,4-Dichlorbenzol, 2-Chlornaphthalin, 1-Chlornaphthalin, Dichlormethan, Trichlormethan (Chloroform), Tetrachlorkohlenstoff, 1,1,1,2-Tetrachlorethan, 1,1,2,2-Tetrachlorethan, Tribrommethan, Epichlorhydrin, 1,3-Dichlor-2-propanol, 1,3-Dichlorbenzol, 1,2-Dichlorbenzol, α-Pinen, β-Pinen, 3-Caren, Limonen, Linalool, Borneol, α-Terpineol, Longiycyclen, Longifolen, Eucalyptol, Campher, Menthol, α-Terpinen, β-Citronellol, Verbenon, 4-t-Butylcyclohexylacetat, Phenol, o-Kresol, m-/p-Kresol, Hexamethylcyclotrisiloxan, Octamethylcyclotetrasiloxan, Decamethylcyclopentasiloxan, Dodecamethylcyclohexasiloxan, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure, 4-Methylvaleriansäure, 2-Pentylfuran, Tetrahydrofuran, Benzothiazol, Dimethyldisulfid, Dimethyltrisulfid, Indol, Skatol, Pyridin, 2-Butanonoxim, N,N-Dimethylformamid, N-methyl-2-pyrrolidinon, Dihydrogensulfid und epsilon-Caprolactam. Besonders bevorzugt ist ein erfindungsgemäßes Verfahren, wobei die organischen Stoffe und/oder anorganischen Stoffe ausgewählt sind aus der Gruppe umfassend Hexanal, Dimethyldisulfid, Dimethyltrisulfid, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure, Dihydrogensulfid und 4-Methylvaleriansäure.

Ein erfindungsgemäßes Verfahren ist besonders bevorzugt, bei dem der TVOC-Wert des Luftstroms umfassend organische Stoffe und/oder anorganische Stoffe und/oder Mikroorganismen größer als 1 mg/m³ ist, bevorzugt größer als 3 mg/m³, besonders bevorzugt größer als 10 mg/m³ ist.

Ein erfindungsgemäßes Verfahren ist besonders bevorzugt, bei dem der TVOC-Wert des Luftstroms nach Durchführen des Verfahrens kleiner als 1 mg/m³ ist, bevorzugt kleiner als 0,3 mg/m³ ist.

Ein erfindungsgemäßes Verfahren ist entsprechend besonders bevorzugt, bei dem der TVOC-Wert des Luftstroms umfassend organische Stoffe und/oder anorganische Stoffe und/oder Mikroorganismen größer als 1 mg/m³ ist, bevorzugt größer als 3 mg/m³, besonders bevorzugt größer als 10 mg/m³ ist und der TVOC-Wert des Luftstroms nach Durchführen des Verfahrens kleiner als 1 mg/m³ ist, bevorzugt kleiner als 0,2 mg/m³ ist.

Der TVOC-Wert ("total volatile organic compounds" oder "Summe der flüchtigen, organischen Verbindungen") wird gemäß "VDI-Richtlinie Nr. 4300 (Blatt 6), Dez 2000: Messen von Innenraumluftverunreinigungen Messstrategie für flüchtige organische Verbindungen" in Verbindung mit der "DIN EN ISO 16017-1 vom Oktober 2003 (Probenahme und Analyse flüchtiger organischer Verbindungen durch Sorptionsröhrchen/thermische Desorption/Kapillar-Gaschromatographie Teil 1: Probenahme mit einer Pumpe; Sorbens TENAXTA, Kapillarsäule DB 624, Detektion: MS (IonTrap)" bestimmt und ist die Summe aus dem VOC ("volatile organic compounds" oder "flüchtige, organische Verbindungen) und weiteren in der Probe nachgewiesenen Substanzen, die nur anhand von Vergleichs-Massenspektren identifiziert werden (nicht individuell identifizierte Verbindungen).

Ein erfindungsgemäßes Verfahren ist besonders bevorzugt, wobei das Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt, vorzugsweise zwischen 50 m³/g ClO₂ und 800 m³/g ClO₂ liegt, besonders bevorzugt zwischen 100 m³/g ClO₂ und 600 m³/g ClO₂ liegt.

Es hat sich überraschenderweise gezeigt, dass bei den hier angegebenen Verhältnissen aus Volumenstrom des Luftstroms in m³/h zu Massenstrom der Chlordioxid enthaltenden wässrigen Lösung in g ClO₂/h besonders gute Resultate bei der Verminderung oder Beseitigung von organischen Stoffen und/oder anorganischen Stoffen und/oder von Mikroorganismen in einem Luftstrom erzielt werden. Bei einem Verhältnis von über 1000 m³/g ClO₂ reicht die Konzentration des Chlordioxids in der wässrigen Lösung möglicherweise nicht mehr aus, um eine Verminderung oder Beseitigung von organischen Stoffen und/oder anorganischen Stoffen und/oder von Mikroorganismen in dem Luftstrom effektiv durchzuführen.

Ein erfindungsgemäßes Verfahren ist ebenfalls bevorzugt, wobei die Konzentration des Chlordioxids in der hergestellten Chlordioxid enthaltenden wässrigen Lösung zwischen 2 mg/L und 8000 mg/l, bevorzugt zwischen 20 mg/L und 1000 mg/L, besonders bevorzugt zwischen 25 mg/L und 500 mg/L liegt. Es hat sich in eigenen Untersuchungen gezeigt, dass bei einer Chlordioxid-Konzentration von weniger als 2 mg pro Liter wässrige Lösung bei einem Gesamtvolumen der wässrigen Phase von 2000 Litern die Verminderung oder Beseitigung von organischen und/oder anorganischen Stoffen und/oder von Mikroorganismen in einem Luftstrom von 40000 m³/h häufig nicht mehr ausreichend ist.

Ein erfindungsgemäßes Verfahren ist bevorzugt, bei dem das Kontaktieren der Chlordioxid enthaltenden wässrigen Lösung mit dem Luftstrom im Gegenstrom oder im Querstrom erfolgt. Alternativ kann das Kontaktieren der Chlordioxid enthaltenden wässrigen Lösung mit dem Luftstrom im Gleichstrom erfolgen.

Beim Kontaktieren der Chlordioxid enthaltenden wässrigen Lösung mit dem Luftstrom im Gegenstrom verläuft der Luftstroms entgegengesetzt zum Volumenstrom der wässrigen Lösung. Entsprechend wird die frisch hergestellte Chlordioxid enthaltende wässrige Lösung mit dem Luftstrom kontaktiert, der weniger belastet ist als der frisch erzeugte Luftstrom. Durch das Waschen im Gegenstrom wird üblicherweise die Effektivität des Waschvorgangs gesteigert.

Das Kontaktieren der Chlordioxid enthaltenden wässrigen Lösung mit dem Luftstrom erfolgt vorzugsweise in einem Tauchwäscher (Blasensäule), Sprühwäscher, Füllkörper- oder Bodenkolonnenwäscher, Strahlwäscher, Wirbelwäscher, Rotationswäscher oder Venturiwäscher, vorzugsweise im Sprühwäscher, Füllkörperwäscher oder Bodenkolonnenwäscher.

Ein erfindungsgemäßes Verfahren ist ebenfalls bevorzugt, wobei die Chlordioxid enthaltende wässrige Lösung durch Oxidation von Chlorit in wässrigem Medium bei einem pH-Wert im Bereich von 1 bis 8,5, bevorzugt im Bereich unter 6,95, besonders bevorzugt im Bereich von 2 bis 3 hergestellt wird, vorzugsweise in einem Rohrreaktor.

Die Bildung von Chlordioxid kann dabei beispielsweise nach der Reaktion

2 ClO₂⁻ + OCl⁻ + 2 H⁺ → 2 ClO₂ + H₂O + Cl⁻

erfolgen und ist stark von der Konzentration der Reaktanten und der Intermediate abhängig. Bei zu starker Verdünnung findet die Reaktion nicht oder nicht mit einem ausreichenden Umsatz statt.

Die Kinetik der Reaktion zur Bildung von Chlordioxid durch Oxidation von Chlorit ist auch vom pH-Wert abhängig. Durch eine Steuerung des pH-Wertes kann daher auch die Bildungsgeschwindigkeit des Chlordioxids geregelt werden. Bei alkalischen pH-Werten verläuft die Bildungsreaktion langsamer, während sie bei einem pH-Wert im Bereich von 2 bis 3 schneller verläuft.

Der pH-Wert der Waschflüssigkeit wird vorzugsweise mit einer starken Säure, vorzugsweise mit Schwefelsäure, Salzsäure oder einer Mischung aus Schwefelsäure und Salzsäure eingestellt. In einer alternativen, bevorzugten Ausgestaltung der vorliegenden Erfindung wird der pH-Wert der Waschflüssigkeit mit Orthophosphorsäure oder Mischungen aus Orthophosphorsäure mit Salzsäure und/oder Schwefelsäure eingestellt.

Es hat sich als vorteilhaft erwiesen, den pH-Wert der wässrigen Lösung in dem erfindungsgemäßen Verfahren zu messen. Hierdurch ist es möglich, das Zuführen der Säure an den Verbrauch der Säure anzupassen. In einem erfindungsgemäßen Verfahren wird daher der pH-Wert der wässrigen Lösung (zumindest) vor dem Zuführen der Säure gemessen und die Dosierung der zugeführten Säure wird in Abhängigkeit des gemessenen pH-Wertes angepasst. Die Messung des pH-Wertes erfolgt vorzugsweise kontinuierlich mit einer pH-Elektrode.

Abhängig vom eingestellten pH-Wert der wässrigen Lösung reagiert aufgrund des Reaktionsgleichgewichtes ein kleiner Teil des hergestellten Chlordioxids zu Chlorit. Zudem verläuft - wie alle chemischen Reaktionen - auch die Reaktion zur Herstellung des Chlordioxids nicht vollständig, sodass geringe Mengen an Edukten (z. B. Chlorit), die nicht umgesetzt wurden, in der wässrigen Lösung verbleiben. Überraschenderweise hat sich gezeigt, dass die verbleibenden Edukte den Waschprozess des Luftstroms nicht negativ beeinflussen. Ein weiterer Vorteil des erfindungsgemäßen Verfahrens ist daher, dass die nicht umgesetzten Edukte (z. B. Chlorit, Chlorid) in der wässrigen Lösung verbleiben und nach dem Kontaktieren der Chlordioxid enthaltenden wässrigen Lösung mit dem Luftstrom beim Herstellen der Chlordioxid enthaltenden wässrigen Lösung wiederverwendet werden können. Hierdurch kann die Menge an benötigten Reagenzien und insbesondere an benötigtem Chlorit signifikant reduziert und der Umsatzgrad des Chlorits zu Chlordioxid durch die zunehmende Chloridkonzentration gesteigert werden. Zudem wird auch die Menge an Abwässern, die entsorgt werden müssen, reduziert.

Ein erfindungsgemäßes Verfahren ist ebenfalls bevorzugt, wobei die Oxidation des Chlorits mittels eines Oxidationsmittels mit einem geeigneten Redoxpotential erfolgt, vorzugsweise mit einer Oxosäure und/oder einem Oxosäure-Anion, bevorzugt mit Hypochlorige Säure/Hypochlorit oder Peroxomonoschwefelsäure/Peroxomonosulfat oder Peroxodischwefelsäure/Peroxodisulfat oder Gemischen aus Peroxomonoschwefelsäure-Peroxodischwefelsäure/Peroxomonosulfaten-Peroxodisulfaten.

Für die Zwecke der Erfindung soll die Bezeichnung "Oxosäuren und/oder Oxosäure-Anionen" ein System von miteinander im Protolysegleichgewicht stehenden Spezies bedeuten, die von Oxosäuren (Elementsauerstoffsäuren) abgeleitet sind, deren Redoxpotential (Oxidationspotential) zur Oxidation von Chlorit zu Chlordioxid geeignet ist. Das Standard-Redoxpotential beträgt für gasförmiges ClO₂ 1,15 V und für in Wasser gelöstes ClO₂ 0,95 V. Die verwendete Oxosäure muss daher unter den Reaktionsbedingungen ein Redoxpotential aufweisen, das in dieser Größenordnung oder darüber liegt. Zur Definition des Redoxpotentials sei verwiesen auf Römpp Chemie-Lexikon Franckh'sche Verlagshandlung, Stuttgart, 8. Aufl, 1985, S. 3522. Im Folgenden soll die Bezeichnung Oxosäure auch die damit im Protolysegleichgewicht stehenden Oxosäure-Anionen umfassen, soweit nicht aus dem Zusammenhang etwas anderes hervorgeht. Geeignete Beispiele von Oxosäuren sind u. a. Hypochlorige Säure, Peroxomonoschwefelsäure (Carosche Säure), Peroxodischwefelsäure, Permanganige Säure sowie andere Säuren mit ausreichendem Redoxpotential. Hiervon sind Hypochlorige Säure und Peroxodischwefelsäure bevorzugt.

Es ist erfindungsgemäß bevorzugt, wenn die an Chlordioxid abgereicherte wässrige Lösung in einen Hauptstrom und einen Teilstrom unterteilt wird und der Teilstrom als wässriges Medium beim Herstellen der Chlordioxid enthaltenden wässrigen Lösung eingesetzt wird. Nach dem Herstellen der Chlordioxid enthaltenden wässrigen Lösung werden der Hauptstrom und der Teilstrom wieder zusammengeführt, vorzugsweise bevor ein erneutes Kontaktieren der durch Vermischen beider Ströme resultierenden Chlordioxid enthaltenden wässrigen Lösung, des Hauptstromes oder des Teilstromes mit dem Luftstrom erfolgt. Die Unterteilung in einen Hauptstrom und einen Teilstrom kann dabei beispielsweise durch einen Bypass erfolgen oder durch ein Rohr-in-Rohr-System. In einer Ausgestaltung des erfindungsgemäßen Verfahrens erfolgt nach dem Zusammenführen des Hauptstroms und des Teilstroms ein aktives Vermischen der wässrigen Lösung, vorzugsweise mit einem statischen Mischer.

Wie bereits weiter oben ausgeführt ist die Reaktion zur Bildung von Chlordioxid stark von der Konzentration der Reaktanten und der Intermediate abhängig. Bei zu starker Verdünnung findet die Reaktion nicht oder mit geringem Umsatz statt. Eigene Untersuchungen haben zudem ergeben, dass hohe Chlordioxid-Ausbeuten von über 85 % (bezogen auf das eingesetzte Chlorit) erreicht werden können, wenn ein gegenüber der stöchiometrisch benötigten Menge mehrfacher Säureüberschuss vorliegt. Zudem hat es sich gezeigt, dass eine hohe Chlorit-Konzentration in der Reaktionslösung die Chlordioxid-Bildung begünstigt und dass auch höhere Reaktionstemperaturen die Chlordioxid-Bildung beschleunigen. Eigene Untersuchungen haben dabei ergeben, dass ein Säureüberschuss von 10 Äquivalenten (pro Mol Chlorit 10 Mol H⁺) nötig ist, um eine nahezu vollständige Umsetzung von dem eingesetzten Chlorit zu Chlordioxid zu erhalten. Allerdings haben eigene Untersuchungen gezeigt, dass es mit einem Überschuss von 2 bis 3 Äquivalenten bereits möglich ist Chlordioxid-Ausbeuten von über 85 % (bezogen auf das eingesetzte Chlorit) zu erreichen. Auch wenn die Chlordioxid-Ausbeute bei einem Überschuss von 2 bis 3 Äquivalenten geringer ist als bei einem Überschuss von 10 Äquivalenten, ist es in einigen Ausgestaltungen der vorliegenden Erfindung ausreichen, einen zwei bis vierfachen molaren Säureüberschuss einzustellen, da hierdurch ausreichende Chlordioxid-Ausbeuten bei einem akzeptablen Säureverbrauch erhalten werden. Insbesondre im Hinblick darauf, dass nicht umgesetztes Chlorit im erfindungsgemäßen Verfahren rezykliert wird und zu einem späteren Zeitpunkt umgesetzt werden kann, ist eine Einbuße der Chlordioxid-Ausbeute hinnehmbar. Ein Säureüberschuss während der Reaktion hat zudem den Vorteil, dass die Bildung von unerwünschtem Chlorat unterbunden wird.

Ein erfindungsgemäßes Verfahren ist daher bevorzugt, in dem die im Reaktor befindliche abgereicherte wässrige Lösung so mit Chlorit und Säure angereichert wird, dass zumindest ein zweifacher molarer Überschuss Säure gegenüber Chlorit vorliegt, vorzugsweise ein zwei bis zehnfacher molarer Überschuss vorliegt, besonders bevorzugt ein zwei bis vierfacher molarer Überschuss. Um die Chlordioxid-Ausbeute noch weiter zu erhöhen, kann auch ein fünf bis zehnfacher molare Überschuss Säure gegenüber Chlorit eingestellt werden.

Um die Konzentration der Reaktanten während der Reaktion zu Chlordioxid möglichst hoch zu halten und dadurch ebenfalls die Chlordioxid-Ausbeute zu erhöhen, hat es sich in eigenen Untersuchungen als Vorteilhaft erwiesen, wenn die an Chlordioxid abgereicherte wässrige Lösung in einen Hauptstrom und einen Teilstrom unterteilt wird und die Zugabe der Reaktanten in den Teilstrom erfolgt. Hierdurch wird lokal eine hohe Konzentration der Reaktanten erzeugt und es hat sich gezeigt, dass die Konzentration an Chlordioxid nach dem Zusammenführen des Hauptstroms und des Teilstroms in der resultierenden Chlordioxid enthaltenden wässrigen Lösung höher ist, als wenn dieselbe Menge der Reaktanten in den Gesamtstrom gegeben worden wäre und keine Teilung des Gesamtstromes erfolgt wäre. Dabei ist es erfindungsgemäß bevorzugt, wenn der Volumenstrom des Teilstroms so eingestellt wird, dass er geringer ist als der Volumenstrom des Hauptstroms.

In einer Ausgestaltung des erfindungsgemäßen Verfahrens wird zumindest ein Teil der wässrigen Lösung erwärmt, um die Reaktionsgeschwindigkeit während der Chlordioxid-Herstellung zu erhöhen. Dabei hat es sich als Vorteilhaft erwiesen, wenn der Teilstrom erwärmt wird, vorzugsweise auf eine Temperatur von über 20 °C, bevorzugt über 25 °C, besonders bevorzugt über 30 °C. Die Erwärmung lediglich des Teilstroms hat den Verteil, dass der zur Erwärmung benötigte Energieverbrauch reduziert werden kann. Insbesondere wenn das erfindungsgemäße Verfahren bei geringen Außentemperaturen (z.B. im Winter) durchgeführt wird, ist eine Erwärmung der wässrigen Lösung während der Bildung von Chlordioxid vorteilhaft, da hierdurch die Chlordioxid-Ausbeute erhöht werden kann.

Ein erfindungsgemäßes Verfahren ist ebenfalls bevorzugt, wobei das Verfahren zeitlich vor, während und/oder nach dem Kontaktieren der Chlordioxid enthaltenden wässrigen Lösung mit dem Luftstrom zusätzlich umfasst:
(a) einen oder mehrere weitere Schritte, die ausgewählt sind aus der Gruppe bestehend aus
   - Entfernen von Staub
      und
   - Entfernen von Ammoniak, vorzugsweise in einem Ammoniakwäscher,
      und/oder
(b) einen oder mehrere weitere Schritte zur Verminderung oder Beseitigung von organischen Stoffen und/oder anorganischen Stoffen und/oder von Mikroorganismen in dem Luftstrom, wobei diese weiteren Schritte vorzugsweise ausgewählt sind aus der Gruppe bestehend aus
   - oxidative Behandlung mit einem weiteren Oxidationsmittel, vorzugsweise ausgewählt aus der Liste umfassend Ozon, Wasserstoffperoxid und Persäuren, vorzugsweise Peressigsäure,
   - biologische Behandlung
      und
   - Auswaschung wasserlöslicher Schadstoffe mit Wasser.

Ein erfindungsgemäßes Verfahren ist ebenfalls bevorzugt mit folgenden Schritten:
- Bereitstellen oder Erzeugen eines Luftstroms, vorzugsweise Abluftstroms, umfassend (i) Ammoniak sowie zusätzlich (ii) organische Stoffe und/oder anorganische Stoffe und/oder Mikroorganismen,
- Herstellen einer Chlordioxid enthaltenden wässrigen Lösung, vorzugsweise in einem Rohrreaktor, durch Oxidation von Chlorit bei einem pH-Wert im Bereich von 1 bis 8,5, bevorzugt im Bereich unter 6,95, besonders bevorzugt im Bereich von 2 bis 3, wobei zur Einstellung des pH-Werts eine Säure eingesetzt wird,
- Kontaktieren der Chlordioxid enthaltenden wässrigen Lösung mit dem Luftstrom, wobei das Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt, bevorzugt zwischen 50 m³/g und 800 m³/g, besonders bevorzugt zwischen 100 m³/g ClO₂ und 600 m³/g ClO₂, sodass das Chlordioxid im Luftstrom enthaltene organische Stoffe und/oder anorganische Stoffe und/oder Mikroorganismen oxidiert und eine an Chlordioxid abgereicherte wässrige Lösung gebildet wird,
- zumindest teilweises Rezyklieren der an Chlordioxid abgereicherten wässrigen Lösung und Einsetzen der rezyklierten wässrigen Lösung als wässriges Medium beim Herstellen der Chlordioxid enthaltenden wässrigen Lösung,
- zeitlich vor, nach oder während des Kontaktierens (vorzugsweise vor dem Kontaktieren) der Chlordioxid enthaltenden wässrigen Lösung mit dem Luftstrom zum Entfernen von Ammoniak aus dem Luftstrom in einem Ammoniakwäscher mittels eines wässrigen Mediums umfassend eine Säure, vorzugsweise Schwefelsäure,
wobei die bei Herstellung der Chlordioxid enthaltenden wässrigen Lösung zur Einstellung des pH-Werts eingesetzte Säure und die im Ammoniakwäscher eingesetzte Säure identisch sind.

Erfindungsgemäß bevorzugt ist ein Verfahren, wobei die rezyklierte wässrige Lösung zur Einstellung des pH-Wertes vermischt wird mit einer sauren wässrigen Lösung, sodass eine pH-adjustierte, an Chlordioxid abgereicherte wässrige Lösung resultiert, welche so mit Chlorit und einem Oxidationsmittel für das Chlorit gemischt wird, dass sich in wässriger Lösung frisches Chlordioxid bildet und eine an Chlordioxid angereicherte wässrige Lösung resultiert, in der das Verhältnis Volumenstrom des Luftstroms in m³/h zu Massenstrom der Chlordioxid enthaltenden wässrigen Lösung in g ClO₂/h zwischen 4 m³/g und 1000 m³/g liegt, bevorzugt zwischen 50 m³/g und 800 m³/g, besonders bevorzugt zwischen 100 m³/g und 600 m³/g und wobei die an Chlordioxid angereicherte wässrige Lösung zur Behandlung des Luftstroms eingesetzt wird.

Ebenfalls erfindungsgemäß bevorzugt ist ein Verfahren, wobei die Chlordioxid enthaltende wässrige Lösung beim Kontaktieren des Luftstroms vorliegt (i) in Tropfenform oder (ii) als Film in einem vom Luftstrom durchströmten porösen Körper oder Füllkörper. Hierdurch kann die Kontaktoberfläche zwischen wässriger Lösung und Luftstrom vergrößert werden und die Verminderung oder Beseitigung von organischen Stoffen und/oder anorganischen Stoffen und/oder von Mikroorganismen in dem Luftstrom wird begünstigt.

Während des Kontaktierens der Chlordioxid enthaltenden wässrigen Lösung mit dem Luftstrom geht aufgrund des Dampfdruckes von Wasser ein Teil des in der wässrigen Lösung enthaltenden Wassers in die Gasphase und somit in den Luftstrom über. Des Weiteren muss aufgrund der zunehmenden Aufsalzung des Kreislaufwassers ein Teil desselben abgelassen und durch Frischwasser ersetzt werden, um Konzentrationsfällungen und erhöhte Korrosionsraten zu vermeiden. Ein erfindungsgemäßes Verfahren ist daher bevorzugt, bei dem der wässrigen Lösung Wasser zugeführt wird. Durch das Zuführen kann der Wasserverlust ausgeglichen werden.

Während des Kontaktierens der Chlordioxid enthaltenden wässrigen Lösung mit dem Luftstrom kann auch ein Teil des Chlordioxids aus der wässrigen Lösung in die Gasphase übergehen und in der Gasphase zu einer Verminderung oder Beseitigung von organischen Stoffen und/oder anorganischen Stoffen und/oder von Mikroorganismen aus der Gasphase beitragen. Chlordioxid, das in die Gasphase übergeht, kann anschließend erneut von der wässrigen Lösung absorbiert werden oder es verbleibt in der Gasphase und wird gemeinsam mit dem ausströmenden Luftstrom durch den Ablauf aus der Apparatur geleitet. Es ist allerdings erfindungsgemäß bevorzugt, den Anteil an Chlordioxid, das aus der Apparatur geleitet wird, möglichst gering zu halten, da hierdurch die Konzentration des Chlordioxids in der wässrigen Lösung reduziert wird und durch Zuführen von Chlorit in den Reaktor neu gebildet werden muss.

Bevorzugt ist ein erfindungsgemäßes Verfahren, wobei der Luftstrom unter Verwendung einer Apparatur erzeugt wird, die ausgewählt ist aus der Gruppe bestehend aus Ventilatoren, Gebläsen, Saugeinrichtungen, Pumpen und beweglichen Komponenten zur Verwirbelung.

Es hat sich gezeigt, dass das erfindungsgemäße Verfahren in üblichen chemischen Waschvorrichtungen oder Rückkühlwerken durchgeführt werden kann, wenn die Wasch- oder Kühlvorrichtungen entsprechend modifiziert werden. Die Modifizierung erfolgt dabei vorzugsweise durch einen Bypass oder durch den Einbau eines Rohr-in-Rohr-Systems in die vorhandene Wasch- oder Kühlvorrichtung. Durch diese Modifikation von bestehenden Anlagen ist eine Neuanschaffung einer Anlage nicht nötig. Hierdurch können Kosten vermieden werden.

Erfindungsgemäß bevorzugt sind Verfahren, bei denen die wässrige Lösung gepuffert wird. Bei einer gepufferten wässrigen Lösung ändert sich der pH-Wert nach Zugabe einer Säure oder einer Base wesentlich weniger stark, als dies in einer ungepufferten wässrigen Lösung der Fall wäre. Die wässrige Lösung wird dabei gepuffert, indem der wässrigen Lösung als pufferndes System eine schwache bis mittelstarke Säure mit geeignetem pKs-Wert zugegeben wird. Dabei ist erfindungsgemäß bevorzugt, dass als mittelstarke Säure Orthophosphorsäure eingesetzt wird.

In einem bevorzugten Verfahren wird der Luftstrom nach dem Ausleiten aus der Waschvorrichtung mit UV-Licht bestrahlt. Durch eine Bestrahlung mit UV-Licht kann Chlordioxid, das sich möglicherweise in dem gereinigten Luftstrom befindet, zersetzt werden. Dies erweist sich insbesondere als vorteilhaft, wenn die Anlage nachts betrieben wird, da aufgrund der fehlenden Sonnenstrahlung eine Zersetzung des Chlordioxids durch Sonnenlicht nicht möglich ist. Entsprechend ist eine Bestrahlung mit UV-Licht bevorzugt, wobei das UV-Licht eine geeignete Wellenlänge aufweist, um Chlordioxid zu zersetzen.

In einem bevorzugten erfindungsgemäßen Verfahren wird die Konzentration des Chlordioxids in der wässrigen Lösung gemessen. Vorzugsweise erfolgt das Messen der Chlordioxidkonzentration (a) nach dem Ausleiten der an Chlordioxid abgereicherten wässrigen Lösung aus der Apparatur und/oder (b) vor dem Zuführen der Chlordioxid enthaltenden wässrigen Lösung zu der Apparatur. Abhängig vom Verbrauch des Chlordioxids, der aus der Chlordioxidkonzentration bestimmt werden kann, kann die in situ Herstellung des Chlordioxids gesteuert werden.

Vorzugsweise erfolgt die Messung der Chlordioxidkonzentration in der wässrigen Lösung mittels amperometrischer, potentiostatischer oder photometrischer Verfahren. Besonders bevorzugt erfolgt die Messung der Chlordioxidkonzentration mittels direktphotometrischer Messung. Ein bevorzugtes Messverfahren ist in der Patentschrift DE 10 2014 000 651 B3 beschrieben. Bei dem dort beschriebenen Verfahren ist keine Kalibrierung nötig.

In einer Ausgestaltung des erfindungsgemäßen Verfahrens wird die wässrige Lösung kontinuierlich oder diskontinuierlich gefiltert. Die Filterung erfolgt vorzugsweise nach dem Ausleiten der wässrigen Lösung aus der Apparatur.

Durch eine Filterung können herausgewaschene Feststoffe und/oder ausgefallene Salze, wie z. B. Ammoniumsalze, aus der Waschflüssigkeit entfernt werden.

In einer bevorzugten Ausgestaltung des vorliegenden Verfahrens wird der Waschflüssigkeit zusätzlich ein Oxidationsmittel zugesetzt, vorzugsweise ausgewählt aus der Liste umfassend Ozon, Wasserstoffperoxid und Persäuren, vorzugsweise Peressigsäure.

Ein weiterer Aspekt der vorliegenden Erfindung betrifft eine Verwendung einer wässrigen Chloritlösung zur Herstellung einer Chlordioxid enthaltenden wässrigen Lösung in einem kontinuierlichen Verfahren, wobei die hergestellte Chlordioxid enthaltende wässrige Lösung als Mittel zur Verminderung oder Beseitigung von organischen Stoffen und/oder anorganischen Stoffen und/oder von Mikroorganismen in einem Luftstrom eingesetzt wird.

Ein weiterer Aspekt der vorliegenden Erfindung betrifft eine Vorrichtung (10) zur Verminderung oder Beseitigung von organischen Stoffen und/oder anorganischen Stoffen und/oder von Mikroorganismen in einem kontinuierlich erzeugten Luftstrom (1), umfassend eine Apparatur (2) zum kontinuierlichen (i) Kontaktieren des Luftstroms (1) mit einer wässrigen Lösung (3) und (ii) Rezyklieren zumindest eines Teils der wässrigen Lösung, wobei in der Apparatur (2) ein Reaktor (15) zur Erzeugung von Chlordioxid so angeordnet ist, dass rezyklierte wässrige Lösung in ihn eintritt.

Erfindungsgemäß bevorzugt ist eine Vorrichtung, bei der der Reaktor (15) ein Rohrreaktor (6) ist.

Ein weiterer Aspekt der vorliegenden Erfindung betrifft eine Vorrichtung (10) zur Verminderung oder Beseitigung von organischen Stoffen und/oder anorganischen Stoffen und/oder von Mikroorganismen, vorzugsweise in einem erfindungsgemäßen Verfahren, in einem kontinuierlich erzeugten Luftstrom (1), umfassend eine Apparatur (2) zum kontinuierlichen (i) Kontaktieren des Luftstroms (1) mit einer wässrigen Chlordioxid enthaltende Lösung (3) und (ii) Rezyklieren zumindest eines Teils der Chlordioxid enthaltende wässrigen Lösung, wobei in der Apparatur (2) ein Reaktor (15) zur Erzeugung von Chlordioxid so angeordnet ist, dass rezyklierte wässrige Lösung, d.h. an Chlordioxid abgereicherte wässrige Lösung (5), in ihn eintritt.

Erfindungsgemäß bevorzugt ist eine Vorrichtung, bei der der Reaktor (15) ein Rohrreaktor (6) ist.

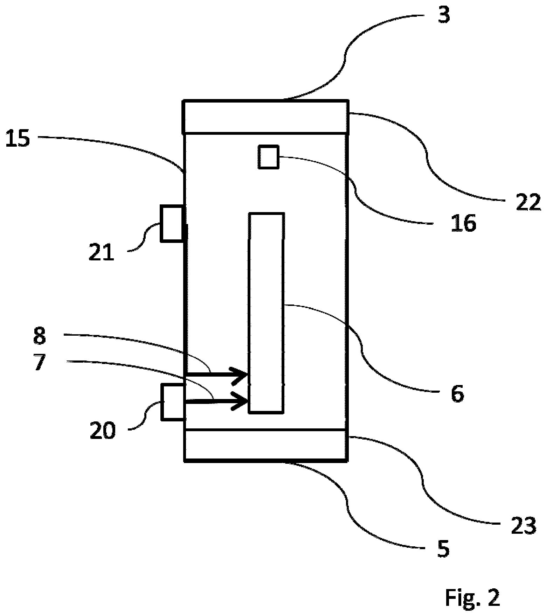

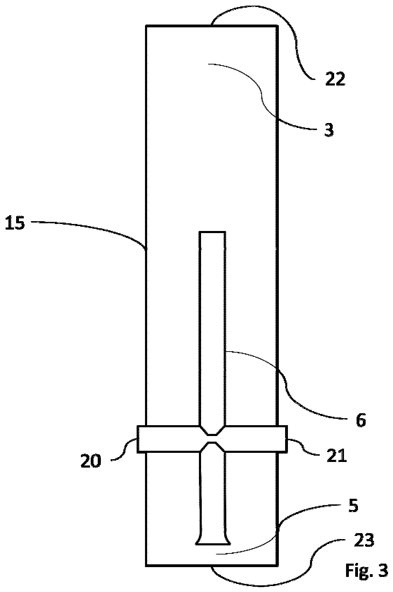

Erfindungsgemäß bevorzugt ist eine Vorrichtung, bei der der Reaktor (15) als ein Rohr-in-Rohr-System ausgebildet ist und die Erzeugung von Chlordioxid vorzugsweise im innenliegenden Rohr, das als Rohrreaktor (6) ausgebildet ist, erfolgt. Diese Ausgestaltung des Reaktors ist beispielsweise in den Figuren 2 und 3 abgebildet.

In einer alternativen Ausgestaltung der der erfindungsgemäßen Vorrichtung, wird der die an Chlordioxid abgereicherte wässrige Lösung nach dem Ablauf (14) zum Ausleiten der an Chlordioxid abgereicherten wässrigen Lösung (5) aus der Apparatur (2) zur Aufbereitung mittels eines Bypasses, d.h. durch zwei verschiedene Rohrführungen, in einen Hauptstrom und einen Teilstrom unterteilt. Der Rohrreaktor (6) ist vorzugsweise im Teilstrom angeordnet. Dabei ist eine erfindungsgemäße Vorrichtung vorzugsweise so ausgestaltet, dass der Volumenstrom im Teilstrom geringer ist als im Hauptstrom.

Ein weiterer Aspekt der vorliegenden Erfindung betrifft eine Verwendung der erfindungsgemäßen Vorrichtung in einem erfindungsgemäßen Verfahren.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die vorliegende Erfindung wird nachfolgend durch Beispiele und Figuren näher erläutert.

### Bezugszeichen:

(1) Luftstrom umfassend organische Stoffe und/oder anorganische Stoffe und/oder Mikroorganismen
(2) Apparatur
(3) Chlordioxid enthaltende wässrigen Lösung
(4) ausströmender Luftstrom
(5) an Chlordioxid abgereicherte wässrige Lösung
(6) Rohrreaktor
(7) Zuführung Chlorit
(8) Zuführung Oxidationsmittel
(10) Vorrichtung
(11) Zulauf zum Zuführen vom Luftstrom (1) umfassend organische Stoffe und/oder anorganische Stoffe und/oder Mikroorganismen zu der Apparatur (2)
(12) Zulauf zum Zuführen einer Chlordioxid enthaltende wässrigen Lösung (3) zu der Apparatur (2)
(13) Ablauf zum Ausleiten des ausströmenden Luftstroms (4) aus der Apparatur (2) zur Weiterbehandlung oder zur Freisetzung
(14) Ablauf zum Ausleiten der an Chlordioxid abgereicherten wässrigen Lösung (5) aus der Apparatur (2) zur Aufbereitung
(15) Reaktor
(16) Sensor zur Messung des pH-Wertes
(17) Sensor zur Messung der Chlordioxidkonzentration
(18) Zulauf zum Zuführen einer Säure in den Waschwasserkreislauf
(19) Flüssigkeitsverteiler
(20) Zulauf zum Zuführen von Chlorit in den Reaktor (15)
(21) Zulauf zum Zuführen eines Oxidationsmittels in den Reaktor (15)
(22) Austritt der Lösung (3) aus dem Reaktor (15)
(23) Zulauf der Lösung (5) in den Reaktor (15)

In **Figur 1** ist ein erstes Ausführungsbeispiel einer erfindungsgemäßen Vorrichtung (10) zum Durchführen eines erfindungsgemäßen Verfahrens schematisch dargestellt.
**Figur 2** zeigt schematisch ein Ausführungsbeispiel eines Reaktors (15), der als Rohr-in-Rohr-System ausgebildet ist.
**Figur 3** zeigt schematisch ein alternatives Ausführungsbeispiel eines Reaktors (15), der als Rohr-in-Rohr-System ausgebildet ist.

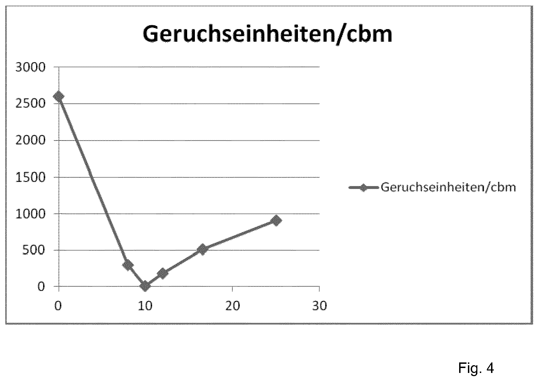

In **Figur 4** wird die Abhängigkeit der in Beispiel 3 gemessenen Geruchseinheiten/cbm (y-Achse) in Abhängigkeit der Gesamtdosierleistung in ml/min (Chloritlösung und Natriumhpochloritlösung) (x-Achse) wiedergegeben.

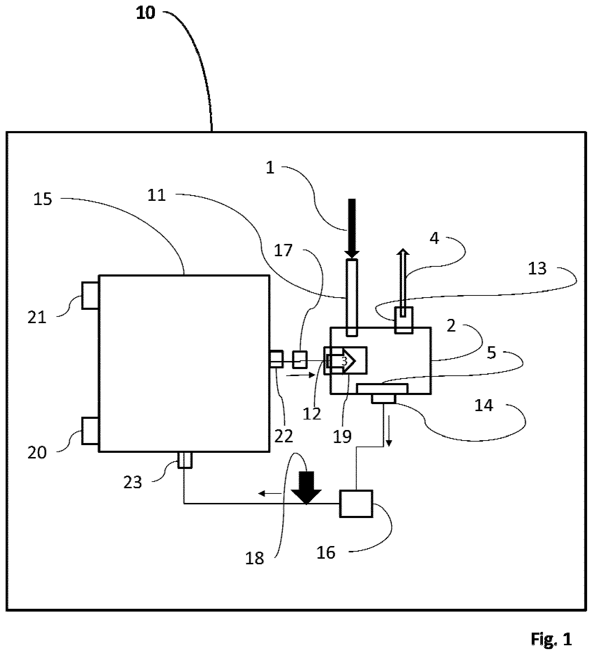

Figur 1 zeigt schematisch ein Ausführungsbeispiel einer erfindungsgemäßen Vorrichtung (10) zum Durchführen eines erfindungsgemäßen Verfahrens. Die Apparatur (2) ist eine Kammer, die zum Kontaktieren der Chlordioxid enthaltenden wässrigen Lösung mit dem Luftstrom geeignet ist, sodass das Chlordioxid im Luftstrom enthaltene organische Stoffe und/oder anorganische Stoffe und/oder Mikroorganismen oxidiert und eine an Chlordioxid abgereicherte wässrige Lösung gebildet wird. Die Apparatur (2) ist dabei so ausgelegt, dass ein Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ eingestellt werden kann. Das Kontaktieren des Luftstroms (1) mit der Chlordioxid enthaltenden wässrigen Lösung kann beispielsweise im Gleichstrom, Gegenstrom oder Querstrom erfolgen. In der abgebildeten Ausführungsform handelt es sich bei der Kammer (2) um einen nicht gefüllten Raum, sodass die Chlordioxid enthaltende wässrige Lösung beim Kontaktieren des Luftstroms überwiegend in Tropfenform vorliegt. In einer alternativen, nicht abgebildeten Ausführungsform ist die Kammer der Apparatur (2) mit Füllkörpern gefüllt, sodass die Chlordioxid enthaltende wässrige Lösung beim Kontaktieren des Luftstroms überwiegend als Film auf den Füllkörpern vorliegt. In einer zweiten alternativen, nicht abgebildeten Ausführungsform ist die Kammer mit Bodenkolonnen gefüllt. Im unteren Bereich der Apparatur befindet sich ein Sumpf, in dem sich die an Chlordioxid abgereicherte wässrige Lösung (5) nach dem Waschen sammelt und anschließend über den Ablauf (14) aus der Apparatur zum Rezyklieren im Reaktor (15) ausgeleitet wird. Im Reaktor (15) erfolgt das Herstellen einer Chlordioxid enthaltenden wässrigen Lösung bzw. das Rezyklieren der an Chlordioxid abgereicherten wässrigen Lösung und Einsetzen der rezyklierten wässrigen Lösung als wässriges Medium beim Herstellen der Chlordioxid enthaltenden wässrigen Lösung. Über einen Zulauf (11) wird ein erzeugter Luftstrom umfassend organische Stoffe und/oder anorganische Stoffe und/oder Mikroorganismen (1) zu der Apparatur (2) zugeführt. Das Erzeugen des Luftstromes (1) ist in Figur 1 nicht abgebildet, kann aber mittels Ventilatoren, Gebläsen, Saugeinrichtungen, Pumpen und beweglichen Komponenten zur Verwirbelung erzeugt werden. Vor dem Zuführen des erzeugten Luftstroms (1) über den Zulauf (11) kann ein (hier nicht abgebildeter) Verfahrensschritt zum Entfernen von Staub und/oder zum Entfernen von Ammoniak, vorzugsweise in einem Ammoniakwäscher, vorgeschaltet werden. In einer Ausführungsform wird der Luftstrom beim Zuführen in die Apparatur durch den Sumpf geleitet. Nach dem Ausleiten der an Chlordioxid abgereicherten wässrigen Lösung (5) aus der Apparatur (2) wird der pH-Wert der wässrigen Lösung (5) durch den Sensor (16) gemessen. Abhängig vom gemessenen pH-Wert der wässrigen Lösung (5) kann über den Zulauf (18) eine Säure (hier Schwefelsäure) zum Regulieren des pH-Wertes der an Chlordioxid abgereicherten wässrigen Lösung (5) gegeben werden. Vorliegend wird der pH-Wert auf einen Bereich von 2 bis 3 eingestellt. Die an Chlordioxid abgereicherte wässrige Lösung (5) wird zum Reaktor (15) geleitet, bei dem es sich vorliegend um ein Rohr-in-Rohr-System handelt. An dem Reaktor (15) sind ein Zulauf (20) zum Zuführen von Chlorit (vorliegend Natriumchlorit) in den Reaktor (15) und ein Zulauf (21) zum Zuführen eines Oxidationsmittels (vorliegend Natriumhypochlorit) in den Reaktor (15) angeordnet. Vorliegend ist der Reaktor (15) mit Strömungswiderständen ausgestattet, die eine Verbesserung der Durchmischung im Reaktor erzielen. Nach dem Durchströmen der wässrigen Lösung durch den Reaktor wird die Chlordioxidkonzentration der wässrigen Lösung mit dem Sensor (17) bestimmt und anschließend wird die wässrige Lösung als Chlordioxid enthaltende wässrige Lösung (3) zu der Apparatur (2) über den Zulauf (12) am Kopf zugeführt und über einen Flüssigkeitsverteiler (19) in die Apparatur gesprüht. Am Kopf ist ein Ablauf (13) zum Ausleiten des Luftstroms (4) aus der Apparatur (2) zur Weiterbehandlung (beispielsweise zur Bestrahlung mit UV-Licht) oder zur Freisetzung angeordnet.

Figur 2 zeigt schematisch ein Ausführungsbeispiel eines Reaktors (15), der als Rohr-in-Rohr-System ausgebildet ist. Eine an Chlordioxid abgereicherte wässrige Lösung (5) wird über einen Zulauf (23) in den Reaktor (15) geführt. An dem Reaktor (15) sind ein Zulauf (20) zum Zuführen von Chlorit (vorliegend Natriumchlorit) über die Leitung (7) in den Rohrreaktor (6) und ein Zulauf (21) zum Zuführen eines Oxidationsmittels (vorliegend Natriumhypochlorit) über die Leitung (8) in den Rohrreaktor (6) angeordnet. Ein Teil der an Chlordioxid abgereicherten wässrigen Lösung (5) durchströmt beim Durchfließen durch den Reaktor (15) auch den Rohrreaktor (6), während ein Teil der an Chlordioxid abgereicherten wässrigen Lösung (5) am Rohrreaktor (6) vorbei fließt. Nach dem Durchströmen der wässrigen Lösung durch den Rohrreaktor (6) wird der pH-Wert der wässrigen Lösung mit dem Sensor (16) bestimmt und anschließend wird die wässrige Lösung als Chlordioxid enthaltende wässrige Lösung (3) zu der Apparatur (2) über den Ablauf (22) aus dem Reaktor (15) ausgeleitet. Der Sensor (16) regelt die Zugabe einer bestimmungsgemäßen Säure bei (18), um den pH-Wert, nach Zugabe der Natriumchloritlösung bei (20) und nach Zugabe der Natriumhypochloritlösung bei (21) auf einen bestimmten pH-Wert, wie beispielsweise 3, zu justieren.

Figur 3 zeigt schematisch ein Ausführungsbeispiel eines Reaktors (15), der als Rohr-in-Rohr-System ausgebildet ist. Eine an Chlordioxid abgereicherte wässrige Lösung (5) wird über einen Zulauf (23) in den Reaktor (15) geführt. An dem Reaktor (15) sind ein Zulauf (20) zum Zuführen von Chlorit (vorliegend Natriumchlorit) in den Rohrreaktor (6) und ein Zulauf (21) zum Zuführen eines Oxidationsmittels (vorliegend Natriumhypochlorit) in den Rohrreaktor (6) angeordnet. Der Innenraum des Rohrreaktors (6) ist mit Verwirbelungskörpern gefüllt (nicht abgebildet). Ein Teil der an Chlordioxid abgereicherten wässrigen Lösung (5) durchströmt beim Durchfließen durch den Reaktor (15) auch den Rohrreaktor (6), während ein Teil der an Chlordioxid abgereicherten wässrigen Lösung (5) am Rohrreaktor (6) vorbei fließt. Nach dem Durchströmen der wässrigen Lösung durch den Rohrreaktor (6) wird wird die wässrige Lösung als Chlordioxid enthaltende wässrige Lösung (3) zu der Apparatur (2) über den Ablauf (22) aus dem Reaktor (15) ausgeleitet. Der Reaktor (15) hat einen Durchmesser von 110 mm. Der Rohrreaktor (6) hat am Zulauf einen Durchmesser von 32 mm und verjüngt sich auf einen Durchmesser von 25 mm. Die Gesamtlänge des Reaktors beträgt vorliegende 1000 mm und die Länge des Rohrreaktors beträgt 500 mm.

### Beispiele:

### Beispiel 1:

In einer Vorrichtung (10) gemäß Figur 1 wurde ein erfindungsgemäßes oxidatives Verfahren zur Verminderung oder Beseitigung von organischen Stoffen und/oder anorganischen Stoffen und/oder von Mikroorganismen in einem Luftstrom (1) durchgeführt. Bei dem Luftstrom (1) handelt es sich um die Abluft aus einer Stallanlage für Hühner. Die Chlordioxid-Konzentration der wässrigen Lösung wurde auf 150 mg/L und 300 mg/L g pro Liter wässrige Lösung eingestellt und der pH-Wert der wässrigen Lösung betrug 2 bis 3. Das Verhältnis aus Volumenstrom des Luftstroms in m³/h zu Massenstrom der Chlordioxid enthaltenden wässrigen Lösung in g ClO₂/h lag bei ca. 300 m³/g ClO₂. Nach dem Ausleiten der an Chlordioxid abgereicherten wässrigen Lösung (5) aus der Apparatur (2) erfolgte ein Rezyklieren der an Chlordioxid abgereicherten wässrigen Lösung (5) und Einsetzen der rezyklierten wässrigen Lösung als wässriges Medium beim Herstellen der Chlordioxid enthaltenden wässrigen Lösung (3).

Von der Abluft aus einer Stallanlage wurden vor und nach Durchführung des oxidativen Verfahrens Proben entnommen und der TVOC-Wert ("total volatile organic compounds" oder "Summe der flüchtigen, organischen Verbindungen") wurde gemäß "VDI-Richtlinie Nr. 4300 (Blatt 6), Dez 2000: Messen von Innenraumluftverunreinigungen Messstrategie für flüchtige organische Verbindungen" in Verbindung mit der "DIN EN ISO 16017-1 vom Oktober 2003 (Probenahme und Analyse flüchtiger organischer Verbindungen durch Sorptionsröhrchen/thermische Desorption/Kapillar-Gaschromatographie Teil 1: Probenahme mit einer Pumpe; Sorbens TENAXTA, Kapillarsäule DB 624, Detektion: MS (IonTrap)" bestimmt.

Der TVOC-Wert der Abluft vor dem Durchführen des erfindungsgemäßen Verfahrens betrug 1,846 mg/m³ und die Abluft enthielt neben weiteren Verbindungen Hexanal, Dimethyldisulfid, Dimethyltrisulfid, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure und 4-Methylvaleriansäure.

Der TVOC-Wert der Abluft nach dem Durchführen des erfindungsgemäßen Verfahrens betrug weniger als 1 mg/m³ und die Konzentration an Hexanal, Dimethyldisulfid, Dimethyltrisulfid, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure und 4-Methylvaleriansäure ist gesunken.

### Beispiel 2:

In einer Vorrichtung (10) gemäß Figur 1 mit einem Reaktor gemäß Figur 2 wurde ein erfindungsgemäßes oxidatives Verfahren zur Verminderung oder Beseitigung von organischen Stoffen und/oder anorganischen Stoffen und/oder von Mikroorganismen in einem Luftstrom (1) durchgeführt. Bei dem Luftstrom (1) handelt es sich um die Abluft aus einer Stallanlage für Hühner. Die Chlordioxid-Konzentration der wässrigen Lösung wurde auf 40 mg/L und 80 mg/L g pro Liter wässrige Lösung eingestellt und der pH-Wert der wässrigen Lösung betrug 2 bis 3. Das Verhältnis aus Volumenstrom des Luftstroms in m³/h zu Massenstrom der Chlordioxid enthaltenden wässrigen Lösung in g ClO₂/h lag bei ca. 300 m³/g ClO₂. Nach dem Ausleiten der an Chlordioxid abgereicherten wässrigen Lösung (5) aus der Apparatur (2) erfolgte ein Rezyklieren der an Chlordioxid abgereicherten wässrigen Lösung (5) und Einsetzen der rezyklierten wässrigen Lösung als wässriges Medium beim Herstellen der Chlordioxid enthaltenden wässrigen Lösung (3).

Von der Abluft aus einer Stallanlage wurden vor und nach Durchführung des oxidativen Verfahrens Proben entnommen und der TVOC-Wert ("total volatile organic compounds" oder "Summe der flüchtigen, organischen Verbindungen") wurde gemäß "VDI-Richtlinie Nr. 4300 (Blatt 6), Dez 2000: Messen von Innenraumluftverunreinigungen Messstrategie für flüchtige organische Verbindungen" in Verbindung mit der "DIN EN ISO 16017-1 vom Oktober 2003 (Probenahme und Analyse flüchtiger organischer Verbindungen durch Sorptionsröhrchen/thermische Desorption/Kapillar-Gaschromatographie Teil 1: Probenahme mit einer Pumpe; Sorbens TENAXTA, Kapillarsäule DB 624, Detektion: MS (IonTrap)" bestimmt.

Der TVOC-Wert der Abluft vor dem Durchführen des erfindungsgemäßen Verfahrens betrug 1,094 mg/m³ und die Abluft enthielt neben weiteren Verbindungen Hexanal, Dimethyldisulfid, Dimethyltrisulfid, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure und 4-Methylvaleriansäure.

Der TVOC-Wert der Abluft nach dem Durchführen des erfindungsgemäßen Verfahrens betrug weniger als 1 mg/m³ und die Konzentration an Hexanal, Dimethyldisulfid, Dimethyltrisulfid, Essigsäure, Propionsäure, Isobuttersäure, Buttersäure, Pivalinsäure, Isovaleriansäure, 2-Methylbuttersäure, Pentansäure, Hexansäure, Heptansäure, 2-Ethylhexansäure, Octansäure und 4-Methylvaleriansäure ist gesunken.

### Beispiel 3:

In einer Vorrichtung (10) gemäß Figur 1 wurde ein erfindungsgemäßes oxidatives Verfahren zur Verminderung oder Beseitigung von organischen Stoffen und/oder anorganischen Stoffen und/oder von Mikroorganismen in einem Luftstrom (1) durchgeführt. Bei dem Luftstrom (1) handelte es sich um die Abluft aus einer Stallanlage für Hühner, die bereits zur Entfernung des Ammoniak- und Staubanteils einen vorgelagerten sauren Wäscher passiert hat und die die Apparatur (2) mit 40.000 m³/h durchströmt. Die Chlordioxid-Konzentration der wässrigen Lösung (3), deren Gesamtvolumen in der Vorrichtung (10) 2000 Liter betrug und die am Zulauf (12) in den Flüssigkeitsverteiler (19) eintritt, wurde während des Versuches von 30,1 mg ClO₂/L auf 93,8 mg ClO₂/L erhöht. Der pH-Wert der wässrigen Lösung betrug 2 bis 3. Das Verhältnis aus Volumenstrom des Luftstroms in m³/h zu Massenstrom der Chlordioxid enthaltenden wässrigen Lösung in g ClO₂/h lag zwischen ca. 670 m³/g ClO₂ und 210 m³/g ClO₂. Nach dem Ausleiten durch den Ablauf (14) der an Chlordioxid abgereicherten wässrigen Lösung (5) aus der Apparatur (2) erfolgte ein Rezyklieren der an Chlordioxid abgereicherten wässrigen Lösung (5) und Einsetzen der rezyklierten wässrigen Lösung als wässriges Medium beim Herstellen der Chlordioxid enthaltenden wässrigen Lösung (3). Nach der Passage des Luftstroms (1) durch den Flüssigkeitsverteiler (19) im Querstromverfahren verlässt der ausströmende Luftstrom (4) durch den Ablauf (13) zum Ausleiten des ausströmenden Luftstroms (4) die Apparatur (2) zur Freisetzung in die Umgebungsluft. Die Geruchseinheiten/cbm wurden olfaktorisch im ausströmenden Luftstrom während des Versuchs bestimmt. Der Volumenstrom des Gesamtvolumens von 2000 Litern in der Vorrichtung (10) beträgt 2000 L/h.

Zum Rezyklieren trat die an Chlordioxid abgereicherte wässrige Lösung (5) über den gesamten Querschnitt des in Figur 3 dargestellten Strömungsrohrs in das Rohr ein. Ein Teilstrom der Lösung (5) trat dabei über den Zulauf mit einem Eintrittsquerschnitt von 32 mm in den Rohrreaktor (6) ein.

Über den Zulauf (20) zum Zuführen von Chlorit in den Reaktor (15) wird eine vorkonfektionierte Natriumchloritlösung in den Reaktor mittels einer Pumpe (nicht abgebildet) eingebracht.

Über den Zulauf (21) zum Zuführen eines Oxidationsmittels in den Reaktor (15) wird eine vorkonfektionierte Natriumhypochloritlösung in den Reaktor mittels einer Pumpe (nicht abgebildet) eingebracht. Die Lösung (5) wurde zuvor bei (18) gem. Fig.1 mit Schwefelsäure auf einen pH-Wert von ca. 2 eingestellt. Ein Sensor zur Messung des pH-Wertes (16) steuert hierbei die Zugabe der Schwefelsäure (18). Es kommt im Rohrreaktor (6), der mit Raschigringen zur Unterstützung der Verwirbelung gefüllt ist, zu einer intensiven Vermischung der Reaktanten und zur Umsetzung gemäß 2 ClO₂⁻ + Cl₂ → 2 ClO₂ + 2 Cl⁻. Die Produkte verlassen über einen 25 mm Querschnitt den Rohrreaktor und vereinigen sich mit dem Hauptstrom. Nach einer weiteren 500 mm Mischstrecke verlässt bei (22) die Lösung (3) den Reaktor (15), um bei 12 in den Flüssigkeitsverteiler (19) wieder einzutreten.

**Tabelle 1 Chlordioxidkonzentration vs. Geruchseinheiten**

| Chloritlösung (20) [ml/min] | Natriumhypochloritlösung (21) [ml/min.] | ClO₂ [g/h] | Geruchseinheiten/m³ |
|---|---|---|---|
| 0 | 0 | 0 | 2600 |
| 4 | 4 | 60,2 | 300 |
| 5 | 5 | 75,3 | 3 |
| 6 | 6 | 90,4 | 180 |
| 8,3 | 8,3 | 125 | 510 |
| 12,5 | 12,5 | 187,5 | 910 |

Abbildung 1, die aus den Werten der Tabelle 1 erstellt worden ist, zeigt deutlich, dass der olfaktorische Ausgangswert des Rohgases aus der Stallabluft 2600 Geruchseinheiten/cbm betrug. Durch sukzessive Erhöhung der Chlordioxidmassenstromes bis auf 75,3 g ClO₂/h fällt der olfaktorische Rohgaswert im Reingas auf 3 Geruchseinheiten/cbm. Eine weitere Erhöhung des Chlordioxidmassenstromes erhöht die olfaktorische Geruchswahrnehmung im Reingas wieder. Jedoch wird im Reingas kein Rohgasgeruch mehr festgestellt, sondern der Geruch nach Chlordioxid, welches nicht durch die Reaktion mit den Geruchsstoffen verbraucht worden ist.

## Patentansprüche

1. Oxidatives Verfahren zur Verminderung oder Beseitigung von organischen Stoffen und/oder anorganischen Stoffen und/oder von Mikroorganismen in einem Luftstrom, mit folgenden kontinuierlich durchgeführten Schritten:
- Erzeugen eines Luftstroms umfassend organische Stoffe und/oder anorganische Stoffe und/oder Mikroorganismen,
- Herstellen einer Chlordioxid enthaltenden wässrigen Lösung,
- Kontaktieren der Chlordioxid enthaltenden wässrigen Lösung mit dem Luftstrom, sodass das Chlordioxid im Luftstrom enthaltene organische Stoffe und/oder anorganische Stoffe und/oder Mikroorganismen oxidiert und eine an Chlordioxid abgereicherte wässrige Lösung gebildet wird,
wobei das Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt,
und
- zumindest teilweises Rezyklieren der an Chlordioxid abgereicherten wässrigen Lösung und Einsetzen der rezyklierten wässrigen Lösung als wässriges Medium beim Herstellen der Chlordioxid enthaltenden wässrigen Lösung.

2. Verfahren nach Anspruch 1, wobei der Luftstrom ein Luftstrom, vorzugsweise ein Abluftstrom, ist aus
- einer Stallanlage, bevorzugt einer Stallanlage für Hühner, Schweine oder Rinder,
- einer Gießereianlage,
- einer Tierkörperbeseitigungsanstalt,
- einer Fischmehlfabrik,
- einem Futtermittelbetrieb,
- einem lebensmittelverarbeitenden Betrieb,
- einer Abdeckerei,
- einer Mülldeponie,
- einer Kläranlage,
- einer Aminosäuregewinnungsanlage,
- einem Kühlturm,
oder
- einer Schlachtanlage für Nutztiere.

3. Verfahren nach einem der vorangehenden Ansprüche, wobei die organischen Stoffe und/oder anorganischen Stoffe im erzeugten Luftstrom ausgewählt sind aus der Gruppe umfassend organische Schadstoffe und schwefelhaltige Schadstoffe.

4. Verfahren nach einem der vorangegangenen Ansprüche, wobei das Verhältnis aus Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt, vorzugsweise zwischen 50 m³/g ClO₂ und 800 m³/g ClO₂ liegt, besonders bevorzugt zwischen 100 m³/g ClO₂ und 600 m³/g ClO₂ liegt.

5. Verfahren nach einem der vorangegangenen Ansprüche, wobei die Konzentration des Chlordioxids in der hergestellten Chlordioxid enthaltenden wässrigen Lösung zwischen 2 mg/L und 8000 mg/L, vorzugsweise zwischen 20 mg/L und 1000 mg/L.

6. Verfahren nach einem der vorangehenden Ansprüche, wobei die Chlordioxid enthaltende wässrige Lösung durch Oxidation von Chlorit in wässrigem Medium bei einem pH-Wert im Bereich von 1 bis 8,5, bevorzugt im Bereich unter 6,95, besonders bevorzugt im Bereich von 2 bis 3 hergestellt wird, vorzugsweise in einem Rohrreaktor.

7. Verfahren nach einem der vorangehenden Ansprüche, wobei die rezyklierte wässrige Lösung zur Einstellung des pH-Wertes vermischt wird mit einer sauren wässrigen Lösung, sodass eine pH-adjustierte, an Chlordioxid abgereicherte wässrige Lösung resultiert, welche so mit Chlorit und einem Oxidationsmittel für das Chlorit gemischt wird, dass sich in wässriger Lösung frisches Chlordioxid bildet und eine an Chlordioxid angereicherte wässrige Lösung resultiert, in der das Verhältnis Volumenstrom des Luftstroms in m³/h zu Massenstrom der Chlordioxid enthaltenden wässrigen Lösung in g ClO₂/h zwischen 4 m³/g ClO₂ und 1000 m³/g ClO₂ liegt, bevorzugt zwischen 50 m³/g und 800 m³/g, besonders bevorzugt zwischen 100 m³/g ClO₂ und 600 m³/g ClO₂ und wobei die an Chlordioxid angereicherte wässrige Lösung zur Behandlung des Luftstroms eingesetzt wird.

8. Vorrichtung (10) zur Verminderung oder Beseitigung von organischen Stoffen und/oder anorganischen Stoffen und/oder von Mikroorganismen in einem kontinuierlich erzeugten Luftstrom (1), umfassend eine Apparatur (2) zum kontinuierlichen (i) Kontaktieren des Luftstroms mit einer wässrigen Chlordioxid enthaltenden Lösung (3) und (ii) Rezyklieren zumindest eines Teils der Chlordioxid enthaltenden wässrigen Lösung,
**dadurch gekennzeichnet, dass**
in der Apparatur (2) ein Reaktor (15) zur Erzeugung von Chlordioxid so angeordnet ist, dass rezyklierte wässrige Lösung in ihn eintritt.

9. Verwendung der Vorrichtung nach Anspruch 8 in einem Verfahren nach einem der Ansprüche 1 bis 7.

10. Verwendung einer wässrigen Chloritlösung zur Herstellung einer Chlordioxid enthaltenden wässrigen Lösung in einem kontinuierlichen Verfahren, wobei die hergestellte Chlordioxid enthaltende wässrige Lösung als Mittel zur Verminderung oder Beseitigung von organischen Stoffen und/oder anorganischen Stoffen und/oder von Mikroorganismen in einem Luftstrom eingesetzt wird, wobei zur Durchführung des Verfahrens eine Vorrichtung gemäß Anspruch 8 verwendet wird.

## Claims

1. Oxidative method for reducing or removing organic substances and/or inorganic substances and/or microorganisms in an air flow, having the following steps which are carried out continuously:
- producing an air flow comprising organic substances and/or inorganic substances and/or microorganisms,
- producing an aqueous solution containing chlorine dioxide,
- contacting the aqueous solution containing chlorine dioxide with the air flow so that the chlorine dioxide oxidises organic substances and/or inorganic substances and/or microorganisms contained in the air flow and an aqueous solution which is depleted in terms of chlorine dioxide is formed,
wherein the ratio of volume flow of the air flow in m³/h to mass flow of the aqueous solution containing chlorine dioxide in g ClO₂/h is between 4 m³/g ClO₂ and 1000 m³/g ClO₂,
and
- at least partially recycling the aqueous solution which is depleted in terms of chlorine dioxide and using the recycled aqueous solution as an aqueous medium when producing the aqueous solution containing chlorine dioxide.

2. Method according to claim 1, wherein the air flow is an air flow, preferably an exhaust air flow, from:
- a pen facility, preferably a pen facility for hens, pigs or cattle,
- a foundry,
- an animal carcass rendering plant,
- a fishmeal factory,
- an animal feed plant,
- a food processing plant,
- a knacker's yard,
- a waste disposal site,
- a sewage treatment plant,
- an amino acid extraction plant,
- a cooling tower,
or
- a slaughter-house for livestock.

3. Method according to either of the preceding claims, wherein the organic substances and/or inorganic substances in the air flow produced are selected from the group comprising organic pollutants and sulphur-containing pollutants.

4. Method according to any one of the preceding claims, wherein the ratio of volume flow of the air flow in m³/h to mass flow of the aqueous solution containing chlorine dioxide in g ClO₂/h is between 4m³/g ClO₂ and 1000 m³/g ClO₂, preferably between 50 m³/g ClO₂ and 800 m³/g ClO₂, in a particularly preferred manner between 100 m³/g ClO₂ and 600 m³/g ClO₂.

5. Method according to any one of the preceding claims, wherein the concentration of the chlorine dioxide in the produced aqueous solution containing chlorine dioxide is between 2 mg/L and 8000 mg/L, preferably between 20 mg/L and 1000 mg/L.

6. Method according to any one of the preceding claims, wherein the aqueous solution containing chlorine dioxide is produced by means of oxidation of chlorite in an aqueous medium at a pH value in the range from 1 to 8.5, preferably in the range below 6.95, in a particularly preferred manner in the range from 2 to 3, preferably in a tube reactor.

7. Method according to any one of the preceding claims, wherein the recycled aqueous solution for adjusting the pH value is mixed with an acidic aqueous solution so that there results a pH-adjusted aqueous solution which is depleted in terms of chlorine dioxide and which is mixed with chlorite and an oxidation medium for the chlorite in such a manner that fresh chlorine dioxide forms in the aqueous solution and there results an aqueous solution which is enriched in terms of chlorine dioxide and in which the ratio of volume flow of the air flow in m³/h to mass flow of the aqueous solution containing chlorine dioxide in g ClO₂/h is between 4m³/g ClO₂ and 1000 m³/g ClO₂, preferably between 50 m³/g ClO₂ and 800 m³/g, in a particularly preferred manner between 100 m³/g ClO₂ and 600 m³/g ClO₂ and wherein the aqueous solution which is enriched in terms of chlorine dioxide is used to process the air flow.

8. Device (10) for reducing or removing organic substances and/or inorganic substances and/or microorganisms in an air flow (1) which is continuously produced, comprising an apparatus (2) for continuously (i) contacting the air flow with an aqueous solution (3) containing chlorine dioxide and (ii) recycling at least a portion of the aqueous solution containing chlorine dioxide, **characterised in that**
a reactor (15) for producing chlorine dioxide is arranged in the apparatus (2) in such a manner that recycled aqueous solution is introduced therein.

9. Use of the device according to claim 8 in a method according to any one of claims 1 to 7.

10. Use of an aqueous chlorite solution for producing an aqueous solution containing chlorine dioxide in a continuous method, wherein the aqueous solution containing chlorine dioxide is used as a medium for reducing or removing organic substances and/or inorganic substances and/or microorganisms in an air flow, wherein a device according to claim 8 is used to carry out the method.

## Revendications

1. Procédé oxydant pour réduire ou éliminer des matières organiques et/ou des matières inorganiques et/ou des micro-organismes dans un flux d'air, avec des étapes suivantes effectuées en continu :
- production d'un flux d'air comprenant des matières organiques et/ou des matières inorganiques et/ou des micro-organismes,
- fabrication d'une solution aqueuse contenant du dioxyde de chlore,
- mise en contact de la solution aqueuse contenant du dioxyde de chlore avec le flux d'air de sorte que le dioxyde de chlore oxyde des matières organiques et/ou des matières inorganiques et/ou des micro-organismes contenus dans le flux d'air et qu'une solution aqueuse appauvrie en dioxyde de chlore est obtenue,
dans lequel le rapport entre le flux volumique du flux d'air en m³/h et le flux massique de la solution aqueuse contenant du dioxyde de chlore en g de ClO₂/h est compris entre 4 m³/g de ClO₂ et 1 000 m³/g de ClO₂,
et
- recyclage au moins partiel de la solution aqueuse appauvrie en dioxyde de chlore et utilisation de la solution aqueuse recyclée en tant que milieu aqueux lors de la fabrication de la solution aqueuse contenant du dioxyde de chlore.

2. Procédé selon la revendication 1, dans lequel le flux d'air est un flux d'air, de préférence un flux d'air sortant, issu
- d'un bâtiment d'élevage, de manière préférée d'un bâtiment d'élevage pour des volailles, des porcs ou des bœufs,
- d'une installation de fonderie,
- d'un atelier d'équarrissage,
- d'une fabrique de farine de poisson,
- d'une entreprise de production d'aliments pour animaux,
- d'une entreprise de transformation de denrées alimentaires,
- d'un établissement de collecte de carcasse d'animaux,
- d'une déchetterie,
- d'une station d'épuration,
- d'une installation de récupération d'acide aminé,
- d'une tour de refroidissement,
ou
- d'un abattoir pour animaux utiles.

3. Procédé selon l'une quelconque des revendications précédentes, dans lequel les matières organiques et/ou matières inorganiques dans le flux d'air généré sont choisies parmi le groupe comprenant des polluants organiques et des polluants contenant du soufre.

4. Procédé selon l'une quelconque des revendications précédentes, dans lequel le rapport entre le flux volumique du flux d'air en m³/h et le flux massique de la solution aqueuse contenant du dioxyde de chlore en g de ClO₂/h est compris entre 4 m³/g de ClO₂ et 1 000 m³/g de ClO₂, de préférence entre 50 m³/g de ClO₂ et 800 m³/g de ClO₂, de manière particulièrement préférée entre 100 m³/g de ClO₂ et 600 m³/g de ClO₂.

5. Procédé selon l'une quelconque des revendications précédentes, dans lequel la concentration du dioxyde de chlore dans la solution aqueuse fabriquée contenant du dioxyde de chlore est comprise entre 2 mg/L et 8 000 mg/L, de préférence entre 20 mg/L et 1 000 mg/L.

6. Procédé selon l'une quelconque des revendications précédentes, dans lequel la solution aqueuse contenant du dioxyde de chlore est fabriquée par oxydation de chlorite dans un milieu aqueux à une valeur pH dans la plage de 1 à 8,5, de manière préférée dans la plage inférieure à 6,95, de manière particulièrement préférée dans la plage de 2 à 3, de préférence dans un réacteur tubulaire.

7. Procédé selon l'une quelconque des revendications précédentes, dans lequel la solution aqueuse recyclée pour régler la valeur pH est mélangée à une solution aqueuse acide de sorte qu'il en résulte une solution aqueuse à pH ajusté, appauvrie en dioxyde de chlore, laquelle est mélangée de telle sorte à du chlorite et à un agent d'oxydation pour le chlorite qu'il se forme un dioxyde de chlore frais dans la solution aqueuse et qu'il en résulte une solution aqueuse enrichie en dioxyde de chlore, dans laquelle le rapport entre le flux volumique en m³/h et le flux massique de la solution aqueuse contenant du dioxyde de chlore en g de ClO₂/h est compris entre 4 m³/g de ClO₂ et 1 000 m³/g de ClO₂, de manière préférée entre 50 m³/g et 800 m³/g, de manière particulièrement préférée entre 100 m³/g de ClO₂ et 600 m³/g de ClO₂, et dans lequel la solution aqueuse enrichie en dioxyde de chlore est utilisée pour traiter le flux d'air.

8. Dispositif (10) pour réduire ou éliminer des matières organiques et/ou des matières inorganiques et/ou des micro-organismes dans un flux d'air (1) généré en continu, comprenant un appareillage (2) pour (i) mettre en contact en continu le flux d'air avec une solution aqueuse (3) contenant du dioxyde de chlore et (ii) recycler en continu au moins une partie de la solution aqueuse contenant du dioxyde de chlore,
**caractérisé en ce que**
est disposé dans l'appareillage (2) un réacteur (15) pour générer du dioxyde de chlore de telle sorte que la solution aqueuse recyclée entre dans celui-ci.

9. Utilisation du dispositif selon la revendication 8 dans un procédé selon l'une quelconque des revendications 1 à 7.

10. Utilisation d'une solution de chlorite aqueuse pour fabriquer une solution aqueuse contenant du dioxyde de chlore dans un procédé continu, dans laquelle la solution aqueuse fabriquée contenant du dioxyde de chlore est utilisée en tant que moyen pour réduire ou éliminer des matières organiques et/ou des matières inorganiques et/ou des micro-organismes dans un flux d'air, dans lequel un dispositif selon la revendication 8 est utilisé pour mettre en œuvre le procédé.
